# FASCICULE DE BREVET EUROPEEN

(11) **EP 4 196 666 B1**
(45) Date de publication et mention de la délivrance du brevet: **25.09.2024**
(21) Numéro de dépôt: 21759110.6
(22) Date de dépôt: 09.08.2021
(51) Int. Cl.: F01D 5/28, F01D 17/02, G06K 19/02, G06K 19/077, B29C 70/88, B29C 70/48, B29C 70/86, B29D 99/00

(54) **AUBE COMPOSITE DE TURBOMACHINE D'AERONEF**
VERBUNDWERKSTOFFSCHAUFEL EINES TURBOTRIEBWERKS EINES LUFTFAHRZEUGS
COMPOSITE BLADE OF AN AIRCRAFT ENGINE

(30) Priorité: 17.08.2020 FR 2008522
(43) Date de publication de la demande: 21.06.2023
(73) Titulaire: SAFRAN, 75015 Paris (FR)
(72) Inventeur: MINERVINO, Matteo, 77550 MOISSY-CRAMAYEL (FR); FAIVRE D'ARCIER, Pierre Jean, 77550 MOISSY-CRAMAYEL (FR); LAMOUCHE, Damien Bruno, 77550 MOISSY-CRAMAYEL (FR); LHOMMEAU, Tony Alain Roger Joël, 77550 MOISSY-CRAMAYEL (FR)
(74) Mandataire: Gevers & Orès
(86) Numéro de dépôt international: PCT/FR2021/051456
(87) Numéro de publication internationale: WO 2022/038323

(56) Documents cités:
- EP-A1- 3 093 800
- EP-A1- 3 211 366
- WO-A1-2021/008842
- US-A1- 2009 188 324

## Description

### Domaine technique de l'invention

La présente invention concerne une aube composite pour une turbomachine d'aéronef ainsi que son procédé de fabrication.

### Arrière-plan technique

L'état de la technique comprend notamment les documents EP-3 211 366, EP-3 093 800 et US-2009/188324.

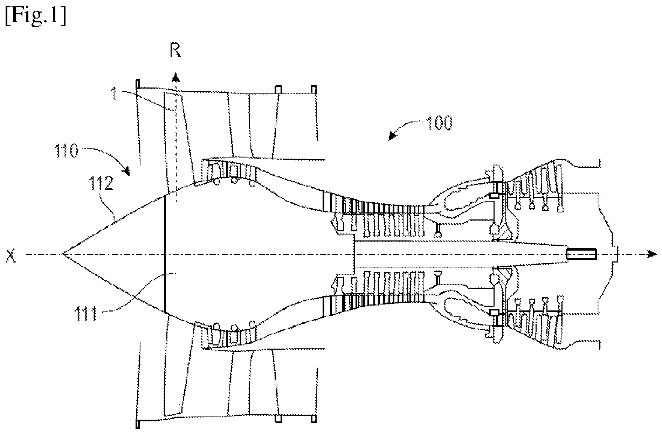

De manière connue, en référence à la figure 1, il est représenté une turbomachine 100 s'étendant selon un axe de turbomachine X et permettant de déplacer l'aéronef à partir d'un flux d'air entrant dans la turbomachine 100 et circulant d'amont en aval. Par la suite, les termes « amont » et « aval » sont définis par rapport à l'axe de turbomachine X orienté d'amont en aval. De même, les termes « intérieur » et « extérieur » sont définis selon une direction radiale R définie par rapport à l'axe X.

De manière connue, la turbomachine 100 comprend un compresseur, une chambre de combustion et une turbine pour entraîner en rotation le compresseur. La turbomachine 100 comporte en amont une soufflante 110 qui permet d'accélérer le flux d'air de l'amont vers l'aval dans la turbomachine 100. La soufflante 110 comprend un disque 111, solidaire en rotation d'un arbre du compresseur, comprenant des logements, répartis à la périphérie du disque 111, dans lesquels sont respectivement montés des aubes 1 par insertion axiale selon l'axe de turbomachine X d'amont vers l'aval. Les aubes 1 s'étendent dans un même plan transversal à l'axe de turbomachine X. Dans cet exemple, la turbomachine 100 comporte un cône 112 qui est monté en amont du disque 111.

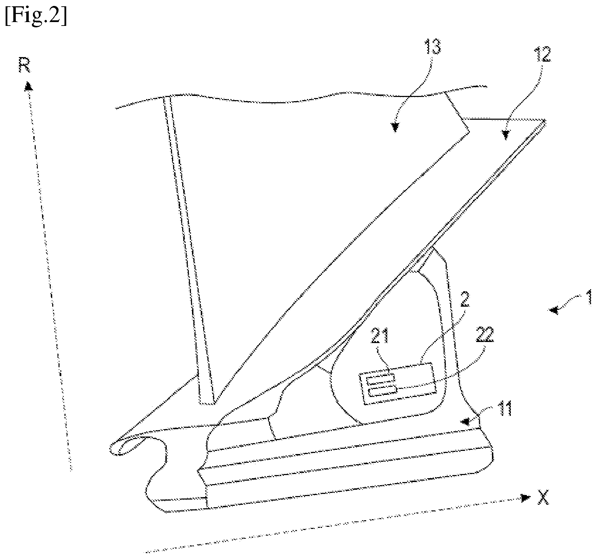

De manière préférée, en référence à la figure 2, chaque aube 1 s'étend radialement selon un axe R par rapport à l'axe de turbomachine X et comprend successivement un pied de montage 11, radialement intérieur, configuré pour être monté dans un desdits logements du disque 111, une pale radiale de déviation d'air 13, radialement extérieure, et éventuellement une plateforme 12 de liaison du pied 11 à la pale 13. En variante, les plateformes 12 pourraient être dissociées des aubes 1 et montées sur le disque 111 indépendamment du montage des aubes sur ce disque.

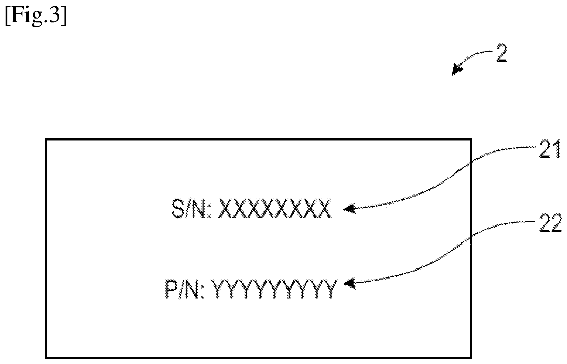

De manière connue, chaque aube de soufflante 1 est identifiée de manière unique par un numéro de série connu sous sa désignation anglaise « *serial number SN* » et un numéro de version connu sous sa désignation anglaise « *part number PN* ». En référence aux figures 2 et 3, le numéro de série 21 et le numéro de version 22 sont écrits sur un support 2, de préférence en tissu, qui est fixé sur une partie du pied 11 et recouvert d'un vernis de protection.

En pratique, la soufflante 110 d'une turbomachine 100 doit être équipée d'aubes de soufflante 1 adéquates pour que la turbomachine 100 puisse fonctionner de manière optimale. En particulier, il est nécessaire de vérifier que les aubes 1 d'une même soufflante 110 possèdent des numéros de série 21 et des numéros de version 22 qui sont compatibles.

Un problème se pose pour les sociétés qui louent des turbomachines à des clients étant donné que les clients peuvent être amenés à remplacer une ou plusieurs aubes 1 de soufflante 110 au cours de la période de location. Lors du retour de la turbomachine, il appartient au loueur de vérifier que les aubes 1 qui sont montées dans la soufflante 110 sont bien compatibles avant de pouvoir louer de nouveau la turbomachine.

La vérification des numéros de série 21 et des numéros de version 22 des aubes 1 d'une soufflante 110 est particulièrement pénible et chronophage. En effet, pour accéder visuellement au support 2 comprenant le numéro de série 21 et le numéro de version 22, un opérateur doit démonter la partie amont de la turbomachine, en particulier, le cône de soufflante 112, une virole, des verrous et des cales avant d'accéder aux aubes 1.

Après lecture du numéro de série 21 et du numéro de version 22, l'opérateur doit remonter la partie amont de la turbomachine, ce qui est long et augmente le risque d'endommagement et d'erreur de montage (non-conformité). En outre, une telle méthode ne protège pas l'opérateur contre une erreur de saisie des numéros de série 21 et des numéros de version 23.

De manière incidente, dans une autre application, on connaît dans l'art antérieur par la demande de brevet EP-A1-2 224 379 d'utiliser un support du type radio-identification, plus connu sous son acronyme anglais RFID, sur une aube de compresseur afin de suivre son état au cours du fonctionnement du turbomoteur. A cet effet, un lecteur de radio-identification est prévu dans le turbomoteur pour lire le support RFID au cours du temps. Un tel enseignement n'est pas pertinent pour un opérateur qui cherche à identifier une aube depuis l'extérieur du turbomoteur. En effet, le turbomoteur comporte de nombreuses pièces métalliques qui réalisent un blindage électromagnétique et forme une cage de Faraday.

La Demanderesse a déjà proposé une solution à ce problème au moyen d'une aube de soufflante équipée d'un support de radio-identification qui est collé sur le pied de l'aube.

La présente invention propose un perfectionnement à cette technologie qui permet notamment d'optimiser la détection du support d'identification de l'aube.

### Résumé de l'invention

L'invention concerne une aube de soufflante pour une turbomachine d'aéronef, l'aube comportant une pale reliée à un pied, l'aube étant réalisée en matériau composite à base de fibres tissées et noyées dans une résine polymérique, l'aube comprenant en outre un support d'identification de l'aube, qui est du type radio-identification, caractérisée en ce qu'elle comprend au moins une première portion dont les fibres sont uniquement des fibres électroconductrices et au moins une seconde portion dont les fibres sont formées par un mélange de fibres électroconductrices et de fibres non électroconductrices, et en ce que le support d'identification est situé dans ou sur ladite seconde portion.

Dans le commerce, différents modèles de support d'identification du type radio-identification (RFID) sont disponibles. Leur approvisionnement est simple et peu couteux mais la performance de la chaine d'identification dépend fortement de l'environnement dans lequel le support est placé et de comment ce support est conçu.

Il existe deux familles connues de support RFID :
- un support dit "métal", dont l'épaisseur est minimum de 1,5mm pour fonctionner à haute fréquence ou UHF (*ultra high frequency*),
- un support dit « non métal » ou non conducteur, dont l'épaisseur est inférieure à 0,5mm pour une application UHF.

On comprend donc qu'un support RFID non métallique est avantageux du fait de sa faible épaisseur, et son application est particulièrement intéressante pour une aube qui a une épaisseur fine imposée par les contraintes aérodynamiques.

Une caractéristique très importante pour maximiser la distance de détection de ce support par un dispositif de lecture approprié est le fait de placer le support dans un milieu isolant électriquement. Cependant, la proximité d'un élément conducteur peut perturber le fonctionnement du support. La résine organique utilisée pour la fabrication des aubes de soufflante est de par sa nature isolante alors que le carbone utilisé pour les fibres de tissage de sa préforme est un bon conducteur électrique.

Le positionnement du support d'identification dans un endroit riche en fibres non électroconductrices permet de réduire la dissipation induite par les fibres électroconductrices de carbone et d'augmenter la distance de détection de quelques centimètres (10 à 20cm) jusqu'à quelques mètres (2 à 1 0m). En plus, pour que le support n'est pas un effet nocif pour le comportement mécanique du composite, le choix du modèle et la position du support dans l'aube sont de préférence soigneusement définis. Le support d'identification est intégré dans l'aube et donc protégé de l'environnement extérieur.

Cette solution permet également de positionner le support dans une zone la plus éloignée possible du cône de soufflante du moteur (qui est un autre élément de perturbation pour le signal RFID), sans toutefois avoir d'impact sur la surface aérodynamique de l'aube.

L'aube selon l'invention peut comprendre une ou plusieurs des caractéristiques suivantes, considérées indépendamment les unes des autres ou en combinaison les unes avec les autres :
- le support d'identification comprend une bille et une antenne radio métallique, la bille étant située dans un espace situé entre des fibres tissées ; le support d'identification est alors entièrement situé à l'intérieur d'une poche de résine, ce qui permet au support de ne pas affecter l'intégrité de l'aube,
   -- la bille est non métallique et par exemple en polymère,
   -- l'antenne est plane,
- la bille est entièrement noyée dans la résine polymérique,
- la bille a un diamètre inférieur ou égal à 5mm, et l'antenne a une épaisseur inférieure ou égale à 0,5mm,
- les fibres électroconductrices sont des fibres de carbone et les fibres non électroconductrices sont des fibres de verre ou thermoplastiques, choisies par exemple parmi des fibres aramides, en polyéthylène et en polyester,
- ladite seconde portion s'étend le long d'un bord de fuite de la pale.
- la résine de l'aube est une résine thermodurcissable ou thermoplastique,
   -- la résine de l'aube est une résine époxy ou bismaléimide,
- le support d'identification est configuré pour fonctionner à une fréquence comprise entre 860 et 930 MHz.

La présente invention concerne également une turbomachine d'aéronef, comportant une soufflante comprenant un disque portant des aubes de soufflante, au moins une de ces aubes de soufflante étant telle que décrite ci-dessus.

La présente invention concerne encore un procédé de fabrication d'une aube telle que décrite ci-dessus, dans lequel il comprend les étapes de :
a) insertion d'au moins une préforme de fibres tissées et du support d'identification dans un moule, ladite au moins une préforme étant réalisée à partir de fibres électroconductrices et de fibres non électroconductrices, le support d'identification étant situé dans une zone de la préforme comportant des fibres non électroconductrices, et
b) injection de résine dans le moule de façon à noyer simultanément la préforme et le support d'identification.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] la figure 1 est une représentation schématique en coupe longitudinale d'une turbomachine selon l'art antérieur ;
[Fig.2] la figure 2 est une représentation schématique d'une aube de soufflante avec un support d'identification selon l'art antérieur ;
[Fig.3] la figure 3 est une représentation schématique du support d'identification de la figure 2 ;
[Fig.4] la figure 4 est une représentation schématique d'une étape de lecture d'un support d'identification du type RFID d'une aube de soufflante d'une turbomachine ;
[Fig.5] la figure 5 est une représentation schématique d'une aube de soufflante avec un support d'identification selon l'invention ;
[Fig.6] la figure 6 est une représentation schématique d'un support d'identification ; et
[Fig.7] la figure 7 est une représentation schématique d'un morceau de préforme tissée dans lequel est positionné un support d'identification.

### Description détaillée de l'invention

Les figures 1 à 3 ont déjà été décrites dans ce qui précède.

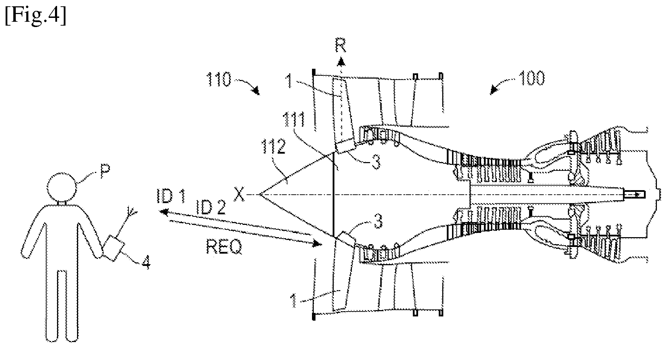

En référence à la figure 4, il est représenté une turbomachine 100 s'étendant selon un axe de turbomachine X et permettant de déplacer l'aéronef à partir d'un flux d'air entrant dans la turbomachine 100 et circulant d'amont en aval. Par la suite, les termes « amont » et « aval » sont définis par rapport à l'axe de turbomachine X orienté d'amont en aval. De même, les termes « intérieur » et « extérieur » sont définis selon une direction radiale R définie par rapport à l'axe X. De manière connue, la turbomachine 100 comprend un compresseur, une chambre de combustion et une turbine pour entraîner en rotation le compresseur. La turbomachine 100 comporte en amont une soufflante 110 qui permet d'accélérer le flux d'air de l'amont vers l'aval dans la turbomachine 100.

La soufflante 110 comprend un disque 111, solidaire en rotation d'un arbre du compresseur, comprenant des logements, répartis à la périphérie du disque 111, dans lesquels sont respectivement montés des aubes 1 par insertion axiale selon l'axe de turbomachine X d'amont vers l'aval. Les aubes 1 s'étendent dans un même plan transversal à l'axe de turbomachine X. Par souci de clarté et de concision, une seule aube 1 va être dorénavant présentée. Dans cet exemple, la turbomachine 100 comporte un cône 112 qui est monté en amont du disque 111.

Chaque aube 1 s'étend selon un axe radial R et comprend successivement un pied de montage 11 configuré pour être monté axialement selon un axe de turbomachine X dans un logement du disque 111 de la soufflante 110, une pale de déviation d'air 13 s'étendant radialement selon l'axe radial R par rapport à l'axe de turbomachine X, et éventuellement une plateforme 12 de liaison de la pale 13 au pied 11. L'aube 1 s'étend radialement en position montée. Le pied de montage 11 est ainsi qualifié de radialement intérieur tandis que la pale de déviation d'air 13 est qualifiée de radialement extérieure. L'aube 1 est réalisée dans un matériau composite comportant une pluralité de fibres noyées dans une résine polymérique. Selon l'invention, certaines des fibres sont conductrices de l'électricité (et appelées fibres électroconductrices) et d'autres fibres sont non conductrices de l'électricité (et appelées fibres non électroconductrices). La résine polymérique n'est pas conductrice de l'électricité.

Les fibres conductrices sont de préférence des fibres métalliques et en particulier des fibres de carbone.

Les fibres non conductrices sont de préférence des fibres de verre ou des fibres thermoplastiques (aramide, polyéthylène, polyester, etc.).

Les fibres sont tissées entre elles de manière à former au moins une préforme qui est destinée à être noyée dans la résine.

La résine est dans cet exemple thermodurcissable mais elle pourrait être de nature différente. Il peut s'agir d'une résine ou résine époxy ou bismaléimide.

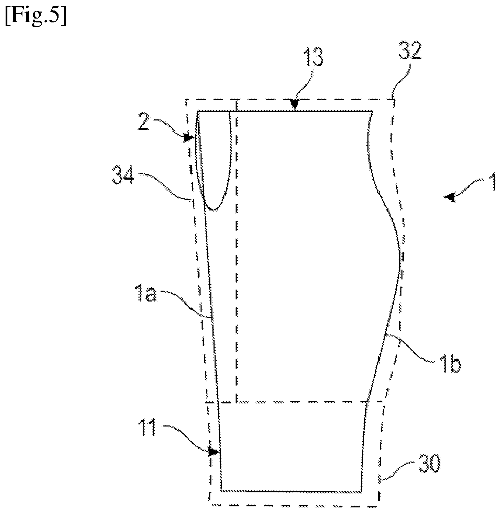

La figure 5 représente un exemple de réalisation d'une aube de soufflante 1 selon un mode préféré de réalisation de l'invention.

L'aube 1 comprend un pied 11 et une pale 13, comme évoqué dans ce qui précède. Le pied 11 de l'aube 1 est ici formé à partir d'une préforme ou d'une partie 30 d'une préforme, qui comprend uniquement des fibres de carbone tissées. C'est également le cas d'une majeure partie de la pale 13 et en particulier de son bord d'attaque 1b, qui est réalisé à partir d'une préforme ou d'une partie 32 de préforme, qui comprend donc uniquement des fibres de carbone. La préforme est en général unique et s'étend dans les deux parties 30, 32.

Au contraire, la portion de la pale 13 s'étendant le long du bord de fuite 1a, est réalisée par tissage de fibres de carbone et de fibres de verre et comprend donc une préforme ou partie 34 de préforme en matériau hybride.

Les parties 30-34 sont délimitées par des rectangles en traits pointillés dans la figure 5.

Selon l'invention, le support d'identification 2 du type RFID est de préférence situé dans la partie 34 et donc au voisinage du bord de fuite 1a de l'aube dans l'exemple représenté. Ceci est particulièrement avantageux car cela permet de faciliter la détection du support 2 à distance par un dispositif de lecture 4, comme illustré à la figure 4. Le support d'identification 2 est de préférence configuré pour être détecté et fonctionner à une fréquence comprise entre 860 et 930 MHz.

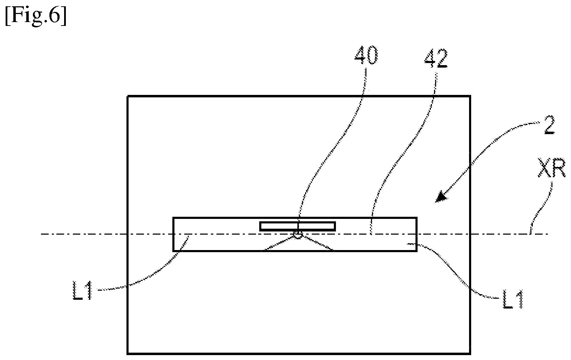

La figure 6 illustre un exemple préféré de support d'identification 2 utilisable dans le cadre de la présente invention.

Ce support d'identification 2 comprend une bille 40 associée à une antenne radio 42 métalliquee, par exemple plane. L'élément le plus encombrant du support 2 est la bille 40 qui a de préférence un diamètre inférieur ou égale à 5mm. L'antenne 42 est plane et peut s'étendre parallèlement à une surface de l'aube 1 ou de la pale 13, ou entre deux plis ou nappes de fibres de la préforme. Cette antenne 42 a par exemple une épaisseur inférieure ou égale à 0,5mm. Ce type de support 2 a l'avantage de répondre aux exigences dimensionnelles, de stabilité thermique et de compatibilité chimique dans le domaine. Par ailleurs, les matériaux du support sont de préférence choisis pour :
- ne pas affecter la résine et sa polymérisation,
- être stable thermiquement pendant la cuisson éventuelle de la préforme imprégnée de résine ou la réaction exothermique de polymérisation de la résine,
- ne pas perturber le tissage et la préforme au moment de la fermeture du moule de fabrication de l'aube, et
- ne pas être trop encombrante.

La bille 40 est par exemple en polymère, et l'antenne 42 est par exemple en cuivre ou aluminium et recouvert d'un polymère thermoplastique ou époxyde (PET, PC, etc.).

Le support d'identification 2 comporte une mémoire de stockage dans la bille 40 dans laquelle peuvent être stockées des données d'identification et de caractérisation, par exemple un numéro de série (ID1) connu sous sa désignation anglaise « *serial number SN* » et un numéro de version (ID2) connu sous sa désignation anglaise « *part number PN »..* Il va de soi que la mémoire de stockage 40 pourrait stocker une unique donnée ou un ensemble de données telles que par exemple un identifiant unique qui permettrait d'identifier de façon particulière une pièce ou plus de deux données d'identification tel qu'un identifiant du fabricant (code CAGE ...), une date de fabrication, un degré de sensibilité à des fluides spécifiques, une référence d'autorisation d'exploitation, des données liées aux opérations de vécus de maintenance ou de logistique de la pièce tel que le statut opérationnel, les opérations réalisées, etc. L'antenne 42 du support d'identification 2 est configurée pour recevoir une requête de lecture REQ et émettre en retour les données d'identifications ID1, ID2. Le support d'identification 2 peut comprendre une batterie ou être alimenté à distance. Un tel support d'identification 2 est connu de l'homme du métier.

De manière connue, parmi les supports d'identification du type radio-identification, on distingue ceux destinés à une utilisation « non métallique », ceux destinés à une utilisation « métallique » et ceux destinés à une utilisation « mixte ». De manière préférée, le support d'identification 2 est destiné à une utilisation « non métallique ».

Selon l'invention, l'antenne 42 comporte au moins un lobe de communication L1 orienté selon un axe radio XR pour recevoir la requête de lecture REQ et émettre en retour les données d'identifications ID1, ID2. Comme illustré à la figure 6, l'antenne 42 peut notamment comporter deux lobes de communication L1 alignés selon un même axe radio XR. Un tel support d'identification 2 peut ainsi être utilisé selon deux sens opposés, selon une même direction.

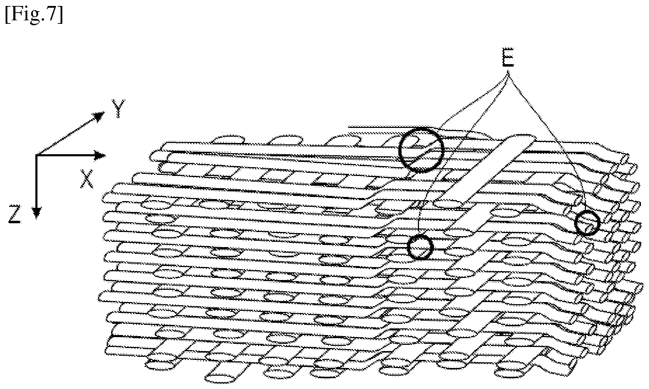

La figure 7 illustre une partie d'une préforme tissée d'une aube 1 selon l'invention et montre que des espaces E existent dans cette préforme pour y loger la bille métallique 40 du support d'identification 2. Ces espaces E sont situés entre des fibres tissées et on comprend que la bille 40, logée dans l'un de ces espaces, est destinée à être noyée dans la résine polymérique qui imbibe la préforme et donc à être entièrement noyée dans la résine polymérique.

L'invention propose également un procédé de fabrication d'une aube 1 telle que décrite ci-dessus, dans lequel il comprend les étapes de :
a) insertion d'au moins une préforme de fibres tissées et du support d'identification dans un moule, la préforme étant réalisée à partir de fibres électroconductrices et de fibres non électroconductrices, le support d'identification étant situé dans une zone de la préforme comportant des fibres non électroconductrices, et
b) injection de résine dans le moule de façon à noyer simultanément la préforme et le support d'identification.

En référence à la figure 4, il va dorénavant être présenté un procédé de lecture individuel et collectif des données d'identification ID1, ID2 des aubes 1 d'une soufflante 110 d'une turbomachine 100, en particulier, un turbomoteur d'aéronef.

Dans cet exemple, un opérateur P utilise un appareil de lecture par radio-identification 4, connu en soi de l'homme du métier, et se place à distance de la turbomachine 100, en particulier, en amont de cette dernière de manière à être proche de la soufflante 110.

A l'aide d'un appareil de lecture par radio-identification 4, l'opérateur P émet de manière radio une requête de lecture REQ qui est reçue de manière radio par l'antenne 42 du support d'identification 2.

En réponse à la requête de lecture REQ, l'antenne 42 du support d'identification 2 émet de manière radio les données d'identifications ID1, ID2 qui sont lues par l'appareil de lecture par radio-identification 4. En particulier, les données d'identifications ID1, ID2 sont émises par les lobes de communication L1 de l'antenne. Les données d'identifications ID1, ID2 lues sont stockées de manière informatique dans l'appareil de lecture par radio-identification 4.

Grâce à l'invention, un opérateur P peut obtenir de manière pratique, rapide et sans risque d'erreur les données d'identifications ID1, ID2 d'une aube 1. En outre, il n'est aucunement nécessaire de démonter la partie amont de la turbomachine 100 comme dans l'art antérieur.

En fonction de la puissance d'émission de l'appareil de lecture par radio-identification 4 et de la distance entre l'appareil de lecture par radio-identification 4 et le support d'identification 2, un opérateur peut lire de manière individuelle un support d'identification 2 d'une aube 1 (puissance faible et distance faible) ou de manière collective une pluralité de supports d'identification 2 des aubes 1 d'une soufflante 110 (puissance élevée et distance importante). En pratique, une lecture peut être réalisée à une distance supérieure à 1 ou 2m.

La présente invention présente plusieurs avantages parmi lesquels :
- il n'y a pas d'étape spécifique supplémentaire pour installer le support d'identification 2 car son intégration est prévue pendant la fabrication de l'aube, avant l'injection de la résine dans le moule de fabrication de l'aube ;
- le support d'identification 2 est intégré dans l'aube et est donc infalsifiable ; il ne peut pas être enlevé sans risque de dégradation de l'aube 1 ;
- le support 2 est noyé dans la résine polymérique et il n'y a donc pas de risque de décollement et de perte accidentelle de ce support en fonctionnement ; et
- une détection du support 2 sans dépose du moteur ou de l'aube ;
- l'antenne 42 du support d'identification a également pour avantage :
   - - d'être fine et donc facilement positionnable et intégrable par rapport à une antenne métallique qui est en général plus épaisse et encombrante ; et
   - - de faciliter la détection par un dispositif de lecture 4.

## Revendications

1. Aube de soufflante (1) pour une turbomachine d'aéronef, l'aube comportant une pale (13) reliée à un pied (11), l'aube étant réalisée en matériau composite à base de fibres tissées et noyées dans une résine polymérique, l'aube comprenant en outre un support (2) d'identification de l'aube, qui est du type radio-identification, **caractérisée en ce qu'**elle comprend au moins une première portion (30, 32) dont les fibres sont uniquement des fibres électroconductrices et au moins une seconde portion (34) dont les fibres sont formées par un mélange de fibres électroconductrices et de fibres non électroconductrices, et **en ce que** le support d'identification est situé dans ou sur ladite seconde portion (34).

2. Aube (1) selon la revendication précédente, dans laquelle le support d'identification (2) comprend une bille (40) et une antenne radio (42) métallique, la bille étant située dans un espace situé entre des fibres tissées.

3. Aube (1) selon la revendication précédente, dans laquelle la bille (40) est entièrement noyée dans la résine polymérique.

4. Aube (1) selon la revendication 2 ou 3, dans laquelle la bille (40) a un diamètre inférieur ou égal à 5mm, et l'antenne (2) a une épaisseur inférieure ou égale à 0,5mm.

5. Aube (1) selon l'une des revendications précédentes, dans laquelle les fibres électroconductrices sont des fibres de carbone et les fibres non électroconductrices sont des fibres de verre ou thermoplastiques, choisies par exemple parmi des fibres aramides, en polyéthylène et en polyester.

6. Aube (1) selon l'une des revendications précédentes, dans laquelle ladite seconde portion (34) s'étend le long d'un bord de fuite (1a) de la pale (13).

7. Aube (1) selon l'une des revendications précédentes, dans laquelle la résine est une résine thermodurcissable ou thermoplastique

8. Aube (1) selon l'une des revendications précédentes, dans laquelle le support d'identification (2) est configuré pour fonctionner à une fréquence comprise entre 860 et 930 MHz.

9. Turbomachine (100) d'aéronef, comportant une soufflante (110) comprenant un disque (111) portant des aubes de soufflante (1), au moins une de ces aubes de soufflante étant telle que définie à l'une des revendications précédentes.

10. Procédé de fabrication d'une aube (1) selon l'une des revendications 1 à 8, dans lequel il comprend les étapes de :
a) insertion d'au moins une préforme de fibres tissées et du support d'identification (2) dans un moule, ladite au moins une préforme étant réalisée à partir de fibres électroconductrices et de fibres non électroconductrices, le support d'identification étant situé dans une zone de la préforme comportant des fibres non électroconductrices, et
b) injection de résine dans le moule de façon à noyer simultanément la préforme et le support d'identification.

## Patentansprüche

1. Gebläseschaufel (1) für ein Turbotriebwerk eines Luftfahrzeugs, wobei die Schaufel ein Blatt (13) aufweist, das mit einem Fuß (11) verbunden ist, wobei die Schaufel aus einem Verbundwerkstoff auf der Basis von Fasern hergestellt ist, die in ein Polymerharz eingewebt und eingebettet sind, wobei die Schaufel weiter einen Träger (2) zur Identifizierung der Schaufel umfasst, der vom Typ Funkidentifikation ist, **dadurch gekennzeichnet, dass** sie mindestens einen ersten Abschnitt (30, 32) umfasst, dessen Fasern ausschließlich elektrisch leitfähige Fasern sind, und mindestens einen zweiten Abschnitt (34), dessen Fasern durch ein Gemisch aus elektrisch leitfähigen und nicht elektrisch leitfähigen Fasern ausgebildet sind, und dass der Träger zur Identifizierung in oder auf dem zweiten Abschnitt (34) angeordnet ist.

2. Schaufel (1) nach dem vorstehenden Anspruch, wobei der Identifizierungsträger (2) eine Kugel (40) und eine Funkantenne (42) aus Metall umfasst, wobei sich die Kugel in einem Raum befindet, der sich zwischen gewebten Fasern befindet.

3. Schaufel (1) nach dem vorstehenden Anspruch, wobei die Kugel (40) vollständig in das Polymerharz eingebettet ist.

4. Schaufel (1) nach Anspruch 2 oder 3, wobei die Kugel (40) einen Durchmesser von weniger als oder gleich 5 mm aufweist und die Antenne (2) eine Dicke von weniger als oder gleich 0,5 mm aufweist.

5. Schaufel (1) nach einem der vorstehenden Ansprüche, wobei die elektrisch leitfähigen Fasern Kohlenstofffasern sind und die nicht elektrisch leitfähigen Fasern Glasfasern oder thermoplastische Fasern sind, die zum Beispiel aus Aramid-, Polyethylen- und Polyesterfasern ausgewählt sind.

6. Schaufel (1) nach einem der vorstehenden Ansprüche, wobei sich der zweite Abschnitt (34) entlang einer Hinterkante (1a) des Blattes (13) erstreckt.

7. Schaufel (1) nach einem der vorstehenden Ansprüche, wobei das Harz ein wärmehärtendes oder thermoplastisches Harz ist

8. Schaufel (1) nach einem der vorstehenden Ansprüche, wobei der Identifizierungsträger (2) dazu konfiguriert ist, bei einer Frequenz zwischen 860 und 930 MHz zu arbeiten.

9. Turbotriebwerk (100) eines Luftfahrzeugs, das einen Gebläse (110) aufweist, der eine Scheibe (111) umfasst, die Gebläseschaufeln (1) trägt, wobei mindestens eine dieser Gebläseschaufeln so ist, wie in einem der vorstehenden Ansprüche definiert.

10. Verfahren zur Herstellung einer Schaufel (1) nach einem der Ansprüche 1 bis 8, wobei es die folgenden Schritte umfasst:
a) Einsetzen mindestens einer Vorform aus gewebten Fasern und des Identifizierungsträgers (2) in eine Form, wobei die mindestens eine Vorform aus elektrisch leitfähigen und nicht elektrisch leitfähigen Fasern hergestellt wird, wobei sich der Identifizierungsträger in einer Zone der Vorform befindet, die nicht elektrisch leitfähige Fasern aufweist, und
b) Einspritzen von Harz in die Form, um gleichzeitig die Vorform und den Identifizierungsträger einzubetten.

## Claims

1. A fan vane (1) for an aircraft turbine engine, the vane comprising a blade (13) connected to a root (11), the vane being made of a composite material based on woven fibres and embedded in a polymeric resin, the vane further comprising a medium (2) for identifying the vane, which is a radio-identification medium, **characterised in that** it comprises at least a first portion (30, 32), the fibres of which are only electrically conductive fibres and at least a second portion (34), the fibres of which are formed by a mixture of electrically conductive fibres and non-electrically conductive fibres, and **in that** the identification medium is located in or on said second portion (34).

2. The vane (1) according to the preceding claim, wherein the identification medium (2) comprises a ball (40) and a metallic radio antenna (42), the ball being located in a space between woven fibres.

3. The vane (1) according to the preceding claim, wherein the ball (40) is entirely embedded in the polymeric resin.

4. The vane (1) according to claim 2 or 3, wherein the ball (40) has a diameter less than or equal to 5mm, and the antenna (2) has a thickness less than or equal to 0.5mm.

5. The vane (1) according to one of the preceding claims, wherein the electrically conductive fibres are carbon fibres and the non-electrically conductive fibres are glass or thermoplastic fibres, selected for example from aramid, polyethylene and polyester fibres.

6. The vane (1) according to one of the preceding claims, wherein said second portion (34) extends along a trailing edge (1a) of the blade (13).

7. The vane (1) according to one of the preceding claims, wherein the resin is a thermosetting or thermoplastic resin.

8. The vane (1) according to one of the preceding claims, wherein the identification medium (2) is configured to operate at a frequency between 860 and 930 MHz.

9. An aircraft turbine engine (100), comprising a fan (110) comprising a disc (111) carrying fan vanes (1), at least one of these fan vanes being as defined in one of the preceding claims.

10. A method of manufacturing a vane (1) according to one of claims 1 to 8, wherein it comprises the steps of:
a) inserting at least one preform of woven fibres and the identification medium (2) into a mould, said at least one preform being made from electrically conductive fibres and non-electrically conductive fibres, the identification medium being located in an area of the preform comprising non-electrically conductive fibres, and
b) injecting resin into the mould so as to simultaneously embed the preform and the identification medium.
